# EUROPÄISCHE PATENTANMELDUNG

(11) **EP 3 936 260 A1**
(43) Veröffentlichungstag der Anmeldung: **12.01.2022**
(21) Anmeldenummer: 20184165.7
(22) Anmeldetag: 06.07.2020
(51) Int. Cl.: B22F 3/105, B22F 3/11, B22F 5/00, B22F 5/04, B22F 7/00, B23K 15/00, B23K 26/342, B29C 64/153, B29C 64/393, B33Y 10/00, B33Y 50/02, B33Y 80/00

(54) **BESTRAHLUNGSSTRATEGIE FÜR EINE ADDITIV HERGESTELLTE STRUKTUR**

(71) Anmelder: Siemens Aktiengesellschaft, 80333 München (DE)
(72) Erfinder: HAJDUK, Michael, 12059 Berlin (DE); BOGNER, Jan Pascal, 13357 Berlin (DE); ALBERT, Johannes, 13357 Berlin (DE); GEISEN, Ole, 14057 Berlin (DE); HEITMANN, Timo, 10245 Berlin (DE); KIENER, Christoph, 81369 München (DE); PURSCHKE, Simon, 12209 Berlin (DE)

(57) **Zusammenfassung**

Es wird ein Verfahren zum Bereitstellen von Herstellungsanweisungen für die additive Herstellung eines Bauteils (10) angegeben. Das Verfahren umfasst, a), das Bereitstellen einer ersten Schraffurbestrahlung (a1, P1, v1) für eine additiv herzustellende Schicht (L), und, b), das Bereitstellen einer zweiten Schraffurbestrahlung (a2) für die Schicht (L), wobei nebeneinander angeordnete Bestrahlungsvektoren (V) mit einer gegenüber der ersten Schraffurbestrahlung (P1, v1) verringerten Bestrahlungsleistung (P2) und/oder einer erhöhten Bestrahlungsgeschwindigkeit (v2) gewählt werden. Weiterhin wird ein entsprechendes Verfahren zur additiven Herstellung des Bauteils (10), ein demgemäß hergestelltes Bauteil (10) sowie ein Computerprogrammprodukt (CPP) bzw. ein Build-Prozessor (4) angegeben.

## Beschreibung

Die vorliegende Erfindung betrifft ein Verfahren zum Bereitstellen von Herstellungsanweisungen, insbesondere Anweisungen für eine selektive Bestrahlung in der additiven Herstellung, sowie ein entsprechendes additives Herstellungsverfahren. Bei dem Verfahren zum Bereitstellen von Herstellungsanweisungen kann es sich um ein rechnerunterstütztes Herstellungsverfahren (CAM: "Computer-Aided-Manufacturing") handeln.

Weiterhin wird ein additiv hergestelltes bzw. herstellbares Bauteil, ein Computerprogramm bzw. Computerprogrammprodukt und ein Build-Prozessor angegeben. Das Bauteil ist vorzugsweise für den Einsatz im Heißgaspfad einer Gasturbine, wie einer stationären Gasturbine, vorgesehen. Besonders bevorzugt betrifft das Bauteil eine Komponente einer Brennkammer bzw. ein Resonatorbauteil wie einen Helmholtz-Resonator oder ein Teil davon. Alternativ kann es sich bei dem Bauteil um ein anderes Bauteil handeln, beispielsweise für den Einsatz in der Automobilität oder in der Luft- oder Raumfahrt.

Vorzugsweise ist das Bauteil eine zu kühlende Komponente, beispielsweise über eine Fluidkühlung, wie eine sogenannte Effusions- oder Filmkühlung. Dazu weist das Bauteil vorzugsweise eine maßgeschneiderte Durchlässigkeit oder Permeabilität für ein entsprechendes Kühlfluid auf. Die genannte Permeabilität des Bauteils ist vorzugsweise zumindest teilweise gleichmäßig und/oder isotrop ausgestaltet.

Moderne Gasturbinen sind Gegenstand stetiger Verbesserung, um ihre Effizienz zu steigern. Dies führt allerdings unter anderem zu immer höheren Temperaturen im Heißgaspfad. Die metallischen Materialien für Laufschaufeln, insbesondere in den ersten Stufen, werden ständig hinsichtlich ihrer Festigkeit bei hohen Temperaturen, Kriechbelastung und thermomechanischer Ermüdung, verbessert.

Die generative oder additive Fertigung wird aufgrund ihres für die Industrie disruptiven Potenzials zunehmend interessant auch für die Serienherstellung der oben genannten Turbinenkomponenten, wie beispielsweise Turbinenschaufeln oder Brennerkomponenten.

Additive Herstellungsverfahren umfassen beispielsweise als Pulverbettverfahren das selektive Laserschmelzen (SLM) oder Lasersintern (SLS), oder das Elektronenstrahlschmelzen (EBM). Weitere additive Verfahren sind beispielsweise "Directed Energy Deposition (DED)"-Verfahren, insbesondere Laserauftragschweißen, Elektronenstrahl-, oder Plasma-Pulverschweißen, Drahtschweißen, metallischer Pulverspritzguss, sogenannte "sheet lamination"-Verfahren, oder thermische Spritzverfahren (VPS LPPS, GDCS).

Ein Verfahren zum selektiven Laserschmelzen ist beispielsweise bekannt aus EP 2 601 006 B1.

Additive Fertigungsverfahren (englisch: "additive manufacturing") haben sich weiterhin als besonders vorteilhaft für komplexe oder filigran gestaltete Bauteile, beispielsweise labyrinthartige Strukturen, Kühlstrukturen und/oder Leichtbau-Strukturen erwiesen. Insbesondere ist die additive Fertigung durch eine besonders kurze Kette von Prozessschritten vorteilhaft, da ein Herstellungs- oder Fertigungsschritt eines Bauteils weitgehend auf Basis einer entsprechenden CAD-Datei und der Wahl entsprechender Fertigungsparameter erfolgen kann.

Eine CAD-Datei oder ein entsprechendes Computerprogrammprodukt, kann ebenfalls beispielsweise als (flüchtiges oder nicht-flüchtiges) Speichermedium, wie z.B. eine Speicherkarte, ein USB-Stick, eine CD-ROM oder DVD, oder auch in Form einer herunterladbaren Datei von einem Server und/oder in einem Netzwerk bereitgestellt oder umfasst werden. Die Bereitstellung kann weiterhin zum Beispiel in einem drahtlosen Kommunikationsnetzwerk durch die Übertragung einer entsprechenden Datei mit dem Computerprogramm erfolgen. Ein Computerprogramm(produkt) kann Programmcode, Maschinencode bzw. numerische Steuerungsanweisungen, wie G-code und/oder andere ausführbare Programmanweisungen im Allgemeinen beinhalten.

Das Computerprogrammprodukt kann weiterhin Geometriedaten oder Konstruktionsdaten in einem dreidimensionalen Format bzw. als CAD-Daten enthalten bzw. ein Programm oder Programmcode zum Bereitstellen dieser Daten umfassen.

Die Herstellung von Gasturbinenschaufeln mittels der beschriebenen pulverbett-basierten Verfahren ("LPBF" englisch für "Laser Powder Bed Fusion") ermöglicht vorteilhaft die Implementierung von neuen Geometrien, Konzepten, Lösungen und/oder Design, welche die Herstellungskosten bzw. die Aufbau- und Durchlaufzeit reduzieren, den Herstellungsprozess optimieren und beispielsweise eine thermo-mechanische Auslegung oder Strapazierfähigkeit der Komponenten verbessern können.

Auf konventionelle Art, beispielsweise gusstechnisch, hergestellte Schaufelkomponenten, stehen der additiven Fertigungsroute beispielsweise hinsichtlich ihrer Designfreiheit und auch in Bezug auf die erforderliche Durchlaufzeit und den damit verbundenen hohen Kosten sowie dem fertigungstechnischen Aufwand deutlich nach.

Insbesondere pulverbettbasierte Verfahren, wie selektives Laserschmelzen oder Elektronenstrahlschmelzen bieten weiterhin die Möglichkeit, durch Parametereinstellungen oder - variationen, poröse Strukturen zielgerichtet herzustellen. Bekannterweise stellt der sogenannter Schraffurabstand bei der flächenartigen (selektiven) Bestrahlung oder Belichtung einer Pulverschicht durch einen Energiestrahl, wie einen Laser oder Elektronenstrahl, einen wichtigen Parameter dar, der besonderen Einfluss auf die erhaltene Struktur der Schicht bzw. des Bauteils hat.

Durch die Einstellung einer bestimmten Porosität im Material ergibt sich technisch weiterhin eine kontrollierbare Permeabilität, welche beispielsweise für eine besonders effektive Kühlung der resultierenden Struktur bzw. Komponente genutzt werden kann. Die Durchlässigkeit, Durchströmbarkeit für das Kühlfluid oder die Permeabilität kann weiterhin je nach Aufbaurichtung der Struktur und Durchströmungsrichtung, variieren. Die Permeabilität ist insbesondere stark parameterabhängig. Neben dem Schraffurabstand (englisch "hatching distance") können unter Umständen die Bestrahlungsleistung, die Scangeschwindigkeit, der Strahlfokus als auch die Schichtdicke einen Einfluss auf die erhaltene Struktur bzw. deren Porosität haben. Insbesondere die Laserleistung korreliert stark mit einer Schmelzbadtiefe, also demjenigen Maß, welches die Ausdehnung einer zunächst flüssigen und dann erstarrenden Struktur während der Pulververfestigung nach unten in das Pulverbett hinein bezeichnet.

Eine Variation des Schraffurabstandes hat maßgeblichen Einfluss auf die Durchströmbarkeit oder Porosität einer Struktur entlang seiner Aufbaurichtung, üblicherweise der Vertikalen (z-Richtung). Wird dagegen der Energieeintrag beispielsweise verringert, so bildet sich ein abgeflachtes Schmelzbad, was eine relativ große laterale Porosität zur Folge hat.

Insbesondere bei Gasturbinenkomponenten des Heißgaspfades, bei denen es zu starker mechanischer als auch thermischer Belastung kommt, kann eine additiv hergestellte poröse Struktur zielgerichtet zur Ausbildung einer vorteilhaften Permeabilität und damit zu einer kontrollierten und deutlich effizienteren Kühlwirkung genutzt werden. Überhaupt können durch die so hergestellten Strukturen überhaupt erst eine Effusionskühlung ermöglichen.

Es ist daher eine Aufgabe der vorliegenden Erfindung, den Einsatzbereich additiver Fertigungstechnologien auf die beschriebenen Bauteile auszuweiten bzw. Material- bzw. Herstellungscharakteristiken additiver Technologien gezielt für strukturelle Vorteile und Designoptimierung der Bauteile zu nutzen. Damit können nicht nur die konventionell bekannten Vorteile der additiven Technologien vorteilhaft genutzt werden. Entgegen der gängigen Ansicht in der Fachwelt, wonach die additiv erzielte Struktur schwächer und noch nicht vergleichbar mit derjenigen konventionell hergestellter Bauteile ist, kann vorliegend sogar eine verbesserte Struktur reproduzierbar bereitgestellt werden.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft ein Verfahren zum Bereitstellen von Herstellungsanweisungen bzw. Parametern für die additive Herstellung eines Bauteils, umfassend das Bereitstellen einer ersten Schraffurbestrahlung für eine (eine jede) additiv herzustellende Schicht, und das Bereitstellen einer zweiten Schraffurbestrahlung für die Schicht, wobei nebeneinander angeordnete Bestrahlungsvektoren mit einer im Vergleich der ersten Schraffurbestrahlung verringerten Bestrahlungsleistung und/oder einer erhöhten Bestrahlungsgeschwindigkeit gewählt werden. Mit anderen Worten werden pro additiv herzustellender Schicht nicht eine einheitliche Bestrahlungsstrategie, sondern verschiedene Bestrahlungsansätze, insbesondere verschiedene Schraffurbestrahlungen oder Schraffurbestrahlungen mit mindestens zwei verschiedenen Vektorverläufen oder Trajektorien vorgesehen. Dieser Ansatz ermöglicht insbesondere die beschriebenen vorteilhaften (porösen) Struktureigenschaften.

Mit anderen Worten können durch die vorliegende Erfindung neuartige Kühlkonzepte bzw. andere permeabilitätsabhängige Anwendungen auf vorteilhafte Weise umgesetzt werden. Die neuen Möglichkeiten der beschriebenen, gerichteten Ausbildung der Porosität bzw. Permeabilität des Materials können beispielsweise zu starken Kühlluft- oder Kühlfluideinsparungen und anderen technischen Nutzungen führen, welche über konventionelle Fertigungsrouten nicht denkbar sind.

In einer Ausgestaltung werden nebeneinander angeordnete Bestrahlungsvektoren der zweiten Schraffurbestrahlung zwischen Bestrahlungsvektoren der ersten Schraffurbestrahlung angeordnet. Wie weiter unten im Detail beschrieben, ermöglicht diese Ausgestaltung zwar einen strukturellen Zusammenhalt der Schicht insgesamt, aber keine vollständig dichte Struktur, sondern eine maßgeschneiderte Porosität und demgemäß Durchlässigkeit für ein Kühlfluid. Insbesondere lässt sich eine besonders vorteilhafte Permeabilität bzw. Kühlwirkung in lateraler Richtung (xy bzw. Schichtebene) des Strukturaufbaus erzielen. Diese Eigenschaften sind dann in der fertigen Komponente je nach geeigneter Orientierung der Struktur relativ zu der Aufbaurichtung (z-Vertikale) der Komponente auszunutzen. Ein entsprechend funktional ausgestalteter Bauteilbereich kann beispielsweise eine Bauteilwandung oder einen anderen Bereich des Bauteils betreffen.

In einer Ausgestaltung werden nebeneinander angeordnete Bestrahlungsvektoren der zweiten Schraffurbestrahlung relativ zu Bestrahlungsvektoren der ersten Schraffurbestrahlung (oder umgekehrt), beispielsweise um einen Winkel von 90° oder weniger, verdreht, sodass sich die Bestrahlungsvektoren der ersten Schraffurbestrahlung und diejenigen der zweiten Schraffurbestrahlung beispielsweise teilweise kreuzen. Technisch bewirkt dies den Vorteil einer höheren Materialfestigkeit.

In einer Ausgestaltung beträgt ein Schraffurabstand der Bestrahlungsvektoren der ersten Schraffurbestrahlung zwischen 2 mm und 3 mm.

In einer Ausgestaltung beträgt ein Schraffurabstand der Bestrahlungsvektoren der zweiten Schraffurbestrahlung zwischen 0,5 mm und 1 mm.

In einer Ausgestaltung werden nebeneinander angeordnete Bestrahlungsvektoren derart gewählt, dass daraus im Wege einer Bestrahlung mit einem Energiestrahl, insbesondere einem Laser oder Elektronenstrahl, eine poröse Struktur, und vorteilhafterweise gerade keine vollständig dichte, kompakte oder undurchlässige Struktur der Schicht entsteht. Dies wird insbesondere dadurch gewährleistet, dass die genannte Bestrahlungsstrategie während der Herstellung teilweise unterbrochene Schmelzbäder erlaubt, welche kontrolliert für die Ausbildung der Porosität genutzt werden.

In einer Ausgestaltung ist das beschriebene Verfahren ein rechnergestütztes Herstellungsverfahren, wie ein CAM-Verfahren.

Ein weiterer Aspekt der vorliegenden Erfindung betrifft ein, insbesondere computerimplementiertes, Verfahren zur Herstellung des Bauteils durch ein pulverbett-basiertes additives Herstellungsverfahren, insbesondere selektives Laserschmelzen oder Elektronenstrahlschmelzen, insbesondere im Zusammenwirken mit einer entsprechenden Bestrahlungsvorrichtung.

In einer Ausgestaltung werden die erste Schraffurbestrahlung und die zweite Schraffurbestrahlung für einen ersten Bauteilbereich des Bauteils (zu dessen Herstellung) festgelegt.

In einer Ausgestaltung werden die beschriebenen Herstellungsanweisungen für die entsprechende additiv herzustellende Schicht in einem ersten Bauteilbereich des Bauteils festgelegt insbesondere im Wege einer Bauprozessvorbereitung. In einem zweiten, von dem ersten Bauteilbereich verschiedenen, Bauteilbereich, werden - gemäß dieser Ausgestaltung - weitere Herstellungsanweisungen definiert, welche von den bisher beschriebenen Herstellungsanweisungen verschieden sind. Diese Ausgestaltung ermöglicht mit Vorteil die Berücksichtigung der Aufbaurichtung und der Porositätseigenschaften für das Bauteil insgesamt. Alternativ oder zusätzlich, kann das Bauteil auf diese Weise mit Bereichen verschiedener Porositäts- oder Permeabilitäteigenschaften ausgestattet werden.

Ein weiterer Aspekt der vorliegenden Erfindung betrifft ein Bauteil, welches gemäß dem beschriebenen Verfahren hergestellt oder herstellbar ist, wobei das Bauteil weiterhin eine zu kühlende Komponente des Heißgaspfades einer Strömungsmaschine, wie einer stationären Gasturbine ist.

In einer Ausgestaltung weist das Bauteil eine Wandung auf, welche eingerichtet ist, im Betrieb des Bauteils zur Ausbildung einer Effusionskühlung von einem Kühlfluid durchströmt zu werden, zweckmäßigerweise um ein entsprechendes Bauteilmaterial bzw. eine Wandung des Bauteils zu kühlen.

In einer Ausgestaltung ist das Bauteil als Turbinenleitschaufel, als Turbinenlaufschaufel, als Hitzeschildkomponente einer Brennkammer einer Strömungsmaschine und/oder als Resonatorbauteil bzw. Dämpfer, insbesondere als thermoakustischer Dämpfer, ausgestaltet.

In einer Ausgestaltung ist das Bauteil als Resonatorbauteil für den Einsatz in bzw. an einer Brennkammer einer Strömungsmaschine, wie einer stationären Gasturbine ausgestaltet, beispielsweise als Helmholtz-Resonator, dessen Material bzw. Wandung eine Porosität aufweist.

In einer Ausgestaltung ist das Bauteil zumindest teilweise mit gleichmäßigen und/oder isotropen Permeabilitätseigenschaften für ein Kühlfluid ausgebildet. Dies ist insbesondere durch die oben beschriebenen Parametervariationen (parameterinduziert) auf reproduzierbare und kontrollierte Art möglich.

Ein weiterer Aspekt der vorliegenden Erfindung betrifft ein Computerprogramm bzw. Computerprogrammprodukt, umfassend die oben beschrieben Herstellungsanweisungen. Das Computerprogramm (Produkt) veranlasst - bei der Ausführung eines entsprechenden Programms durch einen Computer, diesen, beispielsweise zur Ansteuerung und/oder Programmierung eines Build-Prozessors und/oder einer Bestrahlungsvorrichtung einer additiven Herstellungsanlage entsprechend, das Herstellen des Bauteils, wie oben beschrieben durchzuführen.

Ein weiterer Aspekt der vorliegenden Erfindung betrifft ein sogenanntes "Build-Prozessor"-Rechenwerk oder eine entsprechende Schaltung für die additive Herstellung, welche mit Herstellungsanweisungen, wie oben beschrieben, programmiert und/oder programmierbar ist.

Diesbezüglich kann das Computerprogramm bzw. Computerprogrammprodukt einen CAD und/oder CAM-Datensatz mit maschinenlesbaren Herstellungsanweisungen, beispielsweise im STL, VRML oder 3MF Format oder einer anderen Programmiersprache für numerische Steuerungen, wie beispielsweise G-code, umfassen.

In einer Ausgestaltung ist der Build-Prozessor weiterhin eingerichtet, eine Bestrahlungsvorrichtung einer additiven Herstellungsanlage zu veranlassen, das Herstellen des Bauteils wie oben beschrieben durchzuführen.

Ausgestaltungen, Merkmale und/oder Vorteile, die sich vorliegend auf das Verfahren zum Bereitstellen bzw. zum additiven Herstellen beziehen, können ferner das Bauteil selbst oder das Computerprogramm(produkt) bzw. den Build-Prozessor betreffen, und umgekehrt.

Der hier verwendete Ausdruck "und/oder", wenn er in einer Reihe von zwei oder mehreren Elementen benutzt wird, bedeutet, dass jedes der aufgeführten Elemente allein verwendet werden kann, oder es kann jede Kombination von zwei oder mehr der aufgeführten Elemente verwendet werden.

Weitere Einzelheiten der Erfindung werden nachfolgend anhand der Figuren beschrieben.
- Figur 1: deutet anhand einer schematischen Prinzipdarstellung ein pulverbett-basiertes additives Herstellungsverfahren an.
- Figur 2: deutet in mehreren Darstellungen ein erfindungsgemäßes Bauteil an, welches über Mittel der beschriebenen Erfindung hergestellt werden kann.
- Figur 3: deutet - in einer weiteren Ausgestaltung - Darstellungen eines erfindungsgemäßen Bauteils an, welches über Mittel der beschriebenen Erfindung hergestellt werden kann.
- Figur 4: deutet anhand eines schematischen Flussdiagramms erfindungsgemäße Verfahrensschritte an.
- Figur 5: zeigt schematische Aufsicht auf eine additiv herzustellende oder hergestellte Schicht bzw. ein entsprechendes Bestrahlungsmuster mit einer Schraffurbestrahlung.
- Figur 6: deutet eine schematische Aufsicht eines Bestrahlungsmusters für eine selektive Bestrahlung anhand einer ersten Ausgestaltung der vorliegenden Erfindung an.
- Figur 7: deutet eine schematische Schnittansicht einer Schichtenfolge gemäß dem Bestrahlungsmuster aus Figur 6 an.
- Figur 8: deutet eine schematische Aufsicht eines Bestrahlungsmusters für eine selektive Bestrahlung anhand einer weiteren Ausgestaltung der vorliegenden Erfindung an.
- Figur 9: deutet eine schematische Schnittansicht einer Schichtenfolge gemäß dem Bestrahlungsmuster aus Figur 8 an.
- Figur 10: deutet eine schematische Aufsicht eines Bestrahlungsmusters für eine selektive Bestrahlung anhand einer weiteren Ausgestaltung der vorliegenden Erfindung an.
- Figur 11: deutet eine schematische Schnittansicht einer Schichtenfolge gemäß dem Bestrahlungsmuster aus Figur 10 an.
- Figur 12: deutet eine schematische Aufsicht eines Bestrahlungsmusters für eine selektive Bestrahlung anhand einer noch weiteren Ausgestaltung der vorliegenden Erfindung an.
- Figur 13: deutet eine schematische Schnittansicht einer Schichtenfolge gemäß dem Bestrahlungsmuster aus Figur 12 an.

In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

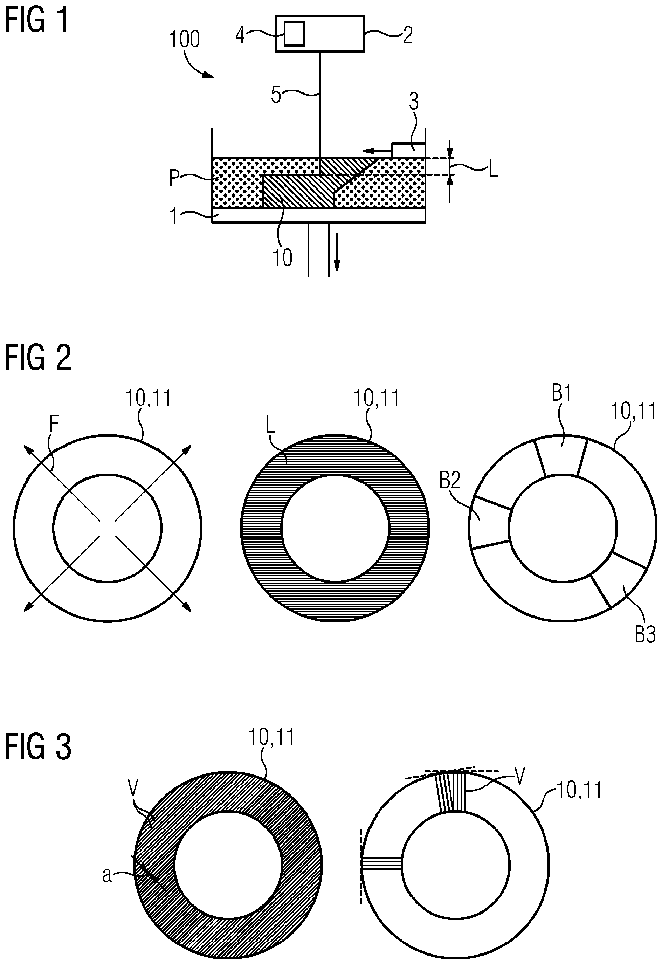

Figur 1 deutet anhand einer vereinfacht dargestellten Herstellungsanlage 100 Schritte eines additiven Herstellungsprozesses eines Bauteils 10 an. Die Herstellungsanlage 100 ist vorzugsweise als LPBF-Anlage und für den additiven Aufbau von Bauteilen oder Komponenten aus einem Pulverbett, insbesondere für selektives Laserschmelzen, ausgestaltet. Die Anlage 100 kann im Speziellen auch eine Anlage zum Elektronenstrahlschmelzen betreffen. Entsprechend weist die Anlage eine Bauplattform 1 auf. Auf der Bauplattform 1 wird ein additiv herzustellendes Bauteil 10 schichtweise aus einem Pulverbett P hergestellt. Letzteres wird durch ein Pulver P gebildet, welches durch eine Beschichtungseinrichtung 3 schichtweise auf der Bauplattform 1 verteilt werden kann.

Nach dem Auftragen einer jeden Schicht L aus Pulver P mit einer Schichtdicke (vgl. ebenfalls Bezugszeichen L) werden gemäß der vorgegebenen Geometrie des Bauteils 10 selektiv Bereiche der Schicht L mit einem Energiestrahl 5, beispielsweise einem Laser oder Elektronenstrahl, von einer Bestrahlungseinrichtung 103 aufgeschmolzen und anschließend verfestigt.

Nach jeder Schicht L wird die Bauplattform 1 vorzugsweise um ein der Schichtdicke L entsprechendes Maß abgesenkt (vergleiche nach unten gerichteter Pfeil in Figur 1). Die Dicke L beträgt üblicherweise lediglich zwischen 20 und 40 µm, so dass der gesamte Prozess leicht eine Anzahl von Tausenden bis hin zu mehreren 10.000 Schichten erfordert.

Dabei können durch den lediglich sehr lokal wirkenden Energieeintrag des Strahls 5 hohe Temperaturgradienten, von beispielsweise 10⁶ K/s oder mehr auftreten. Dementsprechend groß ist selbstverständlich während des Aufbaus und danach üblicherweise auch ein Verspannungszustand des Bauteils, was additive Herstellungsprozesse von dichten zusammenhängenden Schichten erheblich verkompliziert.

Die Geometrie des Bauteils 10 wird üblicherweise durch eine CAD-Datei ("Computer-Aided-Design") festgelegt. Nach dem Einlesen einer solchen Datei in die Herstellungsanlage 100 erfordert der Prozess anschließend zunächst die Festlegung einer geeigneten Bestrahlungsstrategie beispielsweise durch Mittel des CAM ("Computer-Aided-Manufacturing"), wodurch auch ein Aufteilen der Bauteilgeometrie in die einzelnen Schichten erfolgt. Dies kann durch einen entsprechenden Build-Prozessor durchgeführt oder umgesetzt werden.

Bei dem Bauteil 10 kann es sich um ein Bauteil einer Strömungsmaschine, beispielsweise um ein Bauteil für den Heißgaspfad einer Gasturbine, handeln. Insbesondere kann das Bauteil als Turbinenlaufschaufel, als Hitzeschildkomponente einer Brennkammer einer Strömungsmaschine und/oder als Resonator bzw. Dämpfer ausgestaltet sein.

Alternativ kann es sich bei dem Bauteil 10 um ein Ringsegment, ein Brennerteil oder eine Brennerspitze, eine Zarge, eine Schirmung, ein Hitzeschild, eine Düse, eine Dichtung, einen Filter, eine Mündung oder Lanze, einen Stempel oder einen Wirbler handeln, oder einen entsprechenden Übergang, Einsatz, oder ein entsprechendes Nachrüstteil.

Für die Bestrahlung der Pulverschichten L mit einem Energiestrahl 5 weist die Anlage 100 vorzugsweise eine Bestrahlungsvorrichtung 2 auf.

Um Herstellungsanweisungen für den Aufbau des Bauteils (siehe weiter unten), beispielsweise ausgehend von einer vorgegebenen CAD-Geometrie des Bauteils umzusetzen oder zu prozessieren wird ein Build-Prozessor-Rechenwerk 4 oder eine entsprechende Schaltung vorgesehen, welche beispielsweise mit entsprechenden CAM-Informationen oder Herstellungsanweisungen programmiert werden kann und/oder die Bestrahlungsvorrichtung 2 entsprechend veranlassen kann, das Bauteil gemäß den weiter unten beschriebenen Herstellungsanweisungen schichtweise aufzubauen. Die Build-Prozessorschaltung 4 fungiert vorzugsweise als Schnittstelle zwischen der den eigentlichen Aufbauprozess vorbereitenden Software und der entsprechenden Hardware der Herstellungsanlage 100.

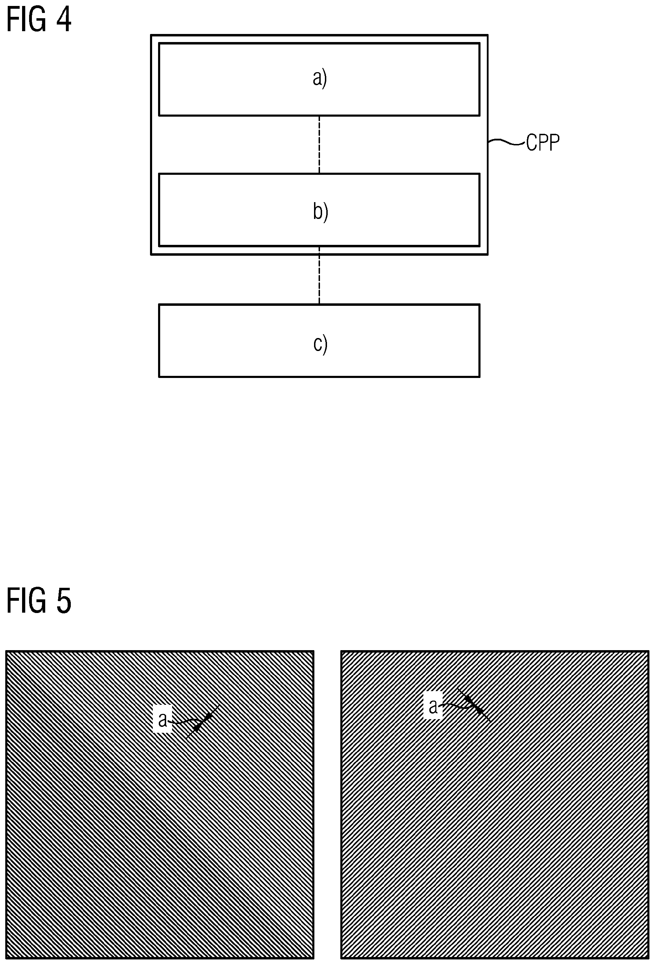

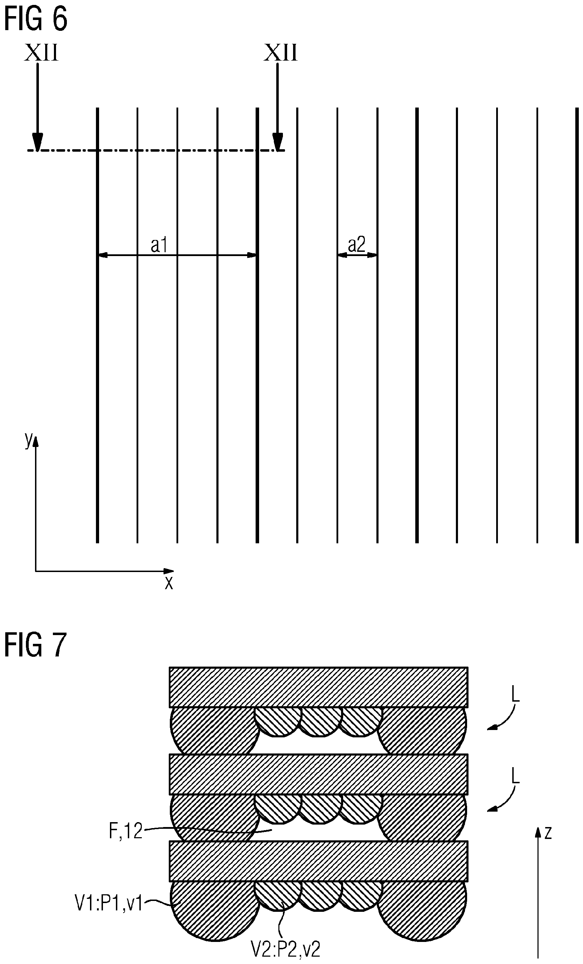

Figur 2 deutet schematisch ein zumindest annähernd oder bereichsweise rotationssymmetrisches Bauteil 10 an. Das Bauteil 10 ist vorzugsweise nach dem in Figur 4 angedeuteten Verfahren hergestellt oder herstellbar (vergleiche weiterhin die Figuren 6 bis 9 für eine Beschreibung der entsprechenden Herstellungsanweisungen für die Herstellung des Bauteils 10.

Vorzugsweise ist das Bauteil 10 eine zu kühlende Komponente des Heißgaspfades einer Strömungsmaschine (vorliegend nicht explizit gekennzeichnet).

Das Bauteil 10 weist eine Wandung 11 auf. Die Wandung 11 ist vorzugsweise eingerichtet, im Betrieb des Bauteils 10 zur Ausbildung einer Effusions- oder Filmkühlung, von einem Kühlfluid F durchströmt zu werden. Demgemäß kann das Bauteil einen Helmholtz-Resonator bezeichnen, welcher beispielsweise zu dessen Kühlung axial von dem Kühlfluid F durchströmt werden kann.

Solche Bauteile werden in Gasturbinen insbesondere zur Unterdrückung von thermoakustisch induzierten Brennkammerschwingungen eingesetzt. Die beiden verbreitetsten Bauformen solcher Resonatoren sind das λ/4-Rohr und der Helmholtz-Dämpfer. Wird die Resonanzfrequenz des Resonators auf die zu dämpfende Schwingungsfrequenz abgestimmt, liefert das λ/4-Rohr bzw. der Helmholtz-Dämpfer an der mit der Brennkammer verbundenen Öffnung einen pulsierenden Massenstrom, der z. B. die Admittanz des Brenneraustritts und damit die periodische Zufuhr von Gemisch in die Flamme stark vermindern kann. Gleichzeitig wird durch Wirbelablösung beim periodischen Ein- und Ausströmvorgang am Übergang zwischen Resonator und Brennkammer sowie durch Wandreibung im Resonator Schwingungsenergie dissipiert.

Um die Dämpfung bei gleichzeitig geringem Kühlluftbedarf zu erhöhen, werden sog. Helmholtz-Resonatoren verwendet. Ein Helmholtz-Resonator umfasst ein Rohrstück mit anschließendem Volumen. Die Dämpfungswirkung besteht darin, dass eine Druckschwingung in der Brennkammer die Fluidmasse im Rohrstück periodisch auslenkt und damit das Helmholtz-Volumen zu periodischen Ausgleichsschwankungen zwingt. Die Helmholtz-Resonatoren stellen selbst ein schwingungsfähiges System mit einer Eigenfrequenz dar. Die Auslegung der Helmholtz-Resonatoren wird derart gewählt, dass ihre Eigenresonanz der Pulsationsfrequenz der Verbrennungsinstabilität entspricht. Werden beide Resonanzsysteme gekoppelt, so können die Helmholtz- Resonatoren im Bereich der Resonanzfrequenzen einen erheblichen Anteil an Schallenergie aufnehmen, der dem Brennraum entzogen wird und einer Rückkopplungsschleife nicht mehr zur Verfügung steht. Das Schwingungssystem wird gedämpft.

Ein entsprechendes Kühlfluid F zur Kühlung der Wandung 11 einer solchen Komponente 10 ist links in Figur 2 durch die radial nach außen gerichteten Pfeile F im linken Abschnitt der Figur 2 angedeutet. Mit der vorgestellten Erfindung wird die Struktur des Bauteils 10 vorzugsweise mit einer Porosität, vorzugsweise einer gerichteten oder maßgeschneiderten Porosität versehen, sodass es beispielsweise Effusionskühlung werden kann. Mit anderen Worten bewirkt die Porosität des Materials, welche direkt aus der additiven Herstellung der Struktur resultiert (vergleiche unten), eine vorbestimmte Permeabilität oder Durchlässigkeit für das Fluid F. Wie weiter unten beschrieben, kann das Bauteil gemäß der linken Darstellung der Figur 2 auf diese Art mit isotropen Permeabilitätseigenschaften ausgestattet werden.

Im linken Teil der Darstellung ist eine Aufbaurichtung z gekennzeichnet.

Die Richtung z entspricht der vertikalen Richtung nach oben (vgl. Figur 1). Obwohl additiv entlang einer solchen festgelegten Aufbaurichtung hergestellte Strukturen üblicherweise eine prozessinhärente strukturelle Anisotropie aufweisen, erlaubt es die vorliegende Erfindung mit Vorteil, diese Struktur oder zumindest die permeabilitätsstiftenden Eigenschaften derselben isotrop zu realisieren, d.h. beispielsweise entlang jeder der eingezeichneten Fluidpfade F gleiche Permeabilitätseigenschaften und damit eine gleiche oder ähnliche Kühlwirkung zu ermöglichen. Dies kann insbesondere bei kleineren Komponenten des Heißgaspfades zweckmäßig sein.

Die mittlere Darstellung der Figur 2 deutet - analog zur Figur 1 - einzelne Schichtdicken L - der für den Aufbau des Bauteils zu bestrahlenden Pulverschichten an.

Die rechte Darstellung des Bauteils 10 in Figur 2 zeigt im Unterschied hierzu - entlang eines Umfangs des Bauteils 10 - verschieden ausgestaltete Strukturbereiche B1, B2, B3. Die Mittel der vorliegenden Erfindung können demgemäß auch dafür genutzt werden, gerade die Permeabilität des Bauteils entlang eines Fluidpfades durch die Bereiche B1, B2 und B3 oder in denselben anderweitig gezielt zu konfektionieren.

In dem Bereich B1 kann beispielsweise im Vergleich zu Standardparametern ein vergrößerter Schraffurabstand gewählt werden. In den folgenden Figuren ist dieser Parameter mit a gekennzeichnet. Somit würde eine Permeabilität oder Durchströmbarkeit entlang der Aufbaurichtung z vergrößert.

Der Bereich B2 könnte beispielsweise mit einer - im Vergleich zu Standard- oder Vergleichsparametern - verringerten Bestrahlungsleistung und/oder vergrößerten Schichtdicke L bestrahlt und/oder aufgebaut werden. Und für den Aufbau des Bereichs B3 könnte beispielsweise zur gezielten Einstellung der Kühlwirkung auch eine Überlagerung solcher Bestrahlungsparameter vorgesehen werden.

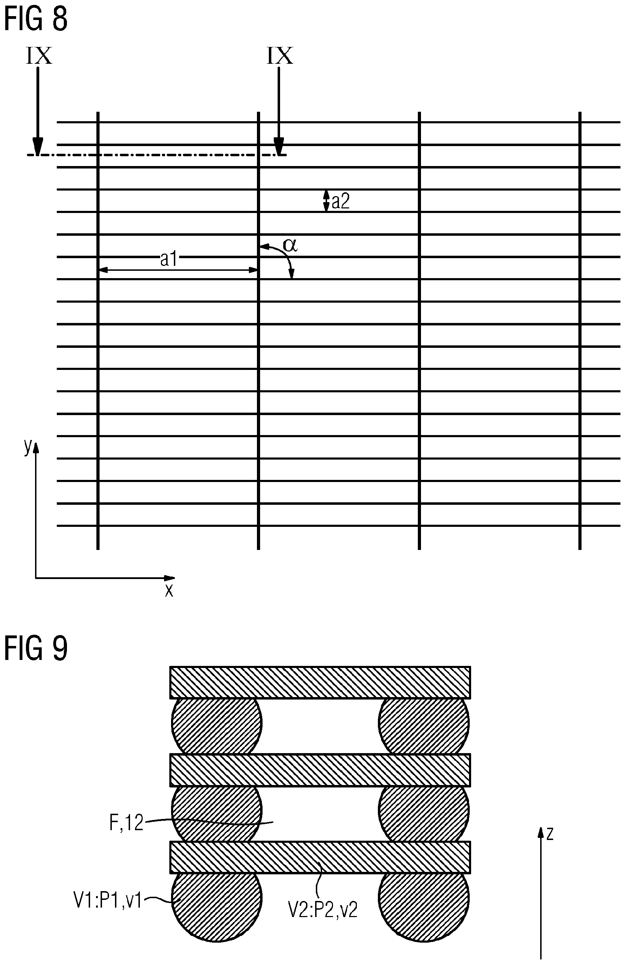

Auch kann die Permeabilität (und damit auch die Kühlwirkung) in einem Bereich gezielt unterdrückt werden, was ja beim Einsatz des Bauteils in einer Gasturbine vorteilhafterweise auch eine Einsparung von Kühlluft und damit einen effizienteren Betrieb bewirken kann. Dementsprechend kann ein Bereich des Bauteils beispielsweise auch vollständig aus Vollmaterial, und ohne maßgebliche Permeabilität aufgebaut werden (siehe Figuren 8 und 9).

Ganz rechts in Figur 2 ist also angedeutet, dass insbesondere eine Schraffurbestrahlung für einen ersten Bauteilbereich des Bauteils verschieden von einer Schraffurbestrahlung für einen zweiten oder weiteren Bauteilbereich definiert oder festgelegt werden kann.

Figur 3 deutet anhand von zwei Teildarstellungen eine Situation an, in der ein entsprechendes Bauteil nicht - wie in Figur 2 dargestellt - liegend aufgebaut wird, sondern derart, dass eine Längsachse des Bauteils beispielsweise mit der Aufbaurichtung z übereinstimmt. Gemäß dieser Orientierung ist die Aufbaurichtung z senkrecht zur Darstellungsebene angeordnet. Es sind jeweils Draufsichten auf eine jede zu verfestigende Bauteilschicht dargestellt. Dementsprechend sind beispielsweise in der linken Darstellung mit den Linien innerhalb der Bauteilkontur keine Schichtverläufe, sondern Bestrahlungsvektoren, insbesondere Schraffurvektoren V angedeutet. Wie ebenfalls weiter unten in den Figuren 6 fortfolgende dargestellt, ist ein Schraffurabstand mit dem Parameter a gekennzeichnet.

Im rechten Teil der Darstellung der Figur 3 ist eine andere Anordnung von Schraffurvektoren dargestellt. Eine Maßschneiderung oder Vorzugsrichtung der Porosität lässt sich - wie hier angedeutet - ebenfalls durch eine Anpassung der Winkel der Schraffurvektoren innerhalb einer jeden zu bestrahlenden Schicht erreichen. Im rechten Teil der Darstellung der Figur 3 ist insbesondere zu erkennen, dass bei derart angeordneten Schraffurvektoren V1, V2 und V3, im radial äußeren Bereich der Komponente 10 ein größerer Abstand zwischen den Vektoren vorherrscht, welcher die Permeabilität nur in diesem äußeren Bereich vergrößert. Im Inneren der Struktur wird die Durchlässigkeit hingegen möglicherweise vollständig unterdrückt.

Die Bauteilgeometrie des entsprechend herzustellenden Bauteils 10 wird üblicherweise durch eine CAD-Datei bereitgestellt und liegt beispielsweise in einem STL-Format vor. Um die oben beschriebene Segmentierung oder Unterteilung der Bauteilgeometrie in (unterschiedliche) Bereiche mit unterschiedlichen Struktureigenschaften zu unterteilen, kann auch algorithmisch oder durch eine Software bereitgestellt werden, welche beispielsweise diese Struktureigenschaften in eine Korrelation zur Aufbaurichtung und/oder zu einem entsprechenden Herstellungsparametersatz setzt, um eine gewünschte Porosität oder Durchlässigkeit für das Fluid F zu erreichen.

Figur 4 zeigt ein schematisches Flussdiagramm von erfindungsgemäßen Verfahrensschritten. Das Verfahren ist ein Verfahren zum Bereitstellen von Herstellungsanweisungen für die additive Herstellung eines Bauteiles, umfassend, a), das Bereitstellen einer ersten Schraffurbestrahlung für die additiv herzustellende Schicht L und, b), das Bereitstellen einer zweiten Schraffurbestrahlung für die Schicht L, wobei nebeneinander angeordnete Bestrahlungsvektoren mit einer gegenüber der ersten Schraffurbestrahlung verringerten Bestrahlungsleistung und/oder einer erhöhten Bestrahlungsgeschwindigkeit gewählt, vorgehen oder bereitgestellt werden.

Das Verfahren kann ein Verfahren zur rechnerunterstützten Herstellung, insbesondere ein CAM-Verfahren sein.

Weiterhin können die beschriebenen Verfahrensschritte a) und b) teilweise oder vollständig durch ein Computerprogramm bzw. Computerprogrammprodukt (vergleiche Bezugszeichen CPP) gesteuert oder durchgeführt werden. Eine beispielsweise ein solches Programm oder ein solches Produkt enthaltende CAM-Datei kann bekanntlich - ebenso wie das Bauteil selber - konventionell als Gegenstand gehandelt werden.

Mit dem Verfahrensschritt c) soll angedeutet werden, dass nebeneinander angeordnete Bestrahlungsvektoren derart gewählt werden, dass daraus im Wege einer Bestrahlung mit einem Laser oder Elektronenstrahl, eine poröse Struktur der Schicht entsteht. Dies erfolgt, wie oben beschrieben, vorzugsweise durch selektive Schmelzverfahren, wie selektives Laserschmelzen oder Elektronenstrahlschmelzen. Der Ausdruck "porös" soll vorliegend vorzugsweise bedeuten, dass die Struktur des Bauteils nicht vollständig dicht oder dicht gepackt ist, wie bei Strukturen, welche bei SLM oder EBM Verfahren durch die Wahl von Standardparametern normalerweise resultieren. Zweckmäßigerweise ist die Porosität des durch die Maßnahmen der vorliegenden Erfindung erzielbaren Materials entsprechend größer, d.h. beispielsweise größer als 2 %, vorzugsweise mehr als 10 % des Materialvolumens.

Figur 5 zeigt in der linken Darstellung eine Aufsicht auf eine additiv zu verfestigende Pulverschicht bzw. ein dafür vorgesehenes Bestrahlungsmuster. Ohne Beschränkung der Allgemeinheit kann eine beliebige (n-te Schicht) Schicht eines gegebenen Schichtaufbaus gekennzeichnet sein. Als Teil des Bestrahlungsvektors sind zweckmäßigerweise eine Vielzahl von parallelen Schraffur- oder Flächenbestrahlungsvektoren V gekennzeichnet, welche sich jeweils von links oben nach rechts unten erstrecken bzw. entsprechend orientiert sind.

Im rechten Teil der Figur 5 ist vorzugsweise eine auf die beschriebene, n-te Schicht folgende, n + erste Schicht gekennzeichnet; bzw. ein entsprechendes Bestrahlungsmuster gemäß dem die Schicht im Wege der additiven Herstellung eines Bauteils bestrahlt werden soll. Im Gegensatz zu der linken Darstellung wurde das Bestrahlungsmuster der n+1 Schicht bzw. entsprechende Schraffurvektoren um einen Winkel relativ zu denjenigen Vektoren aus der linken Darstellung verdreht.

Figur 6 deutet anhand einer ersten Ausgestaltung des erfindungsgemäßen Verfahrens ein Bestrahlungsmuster an bzw. entsprechende Herstellungsanweisungen für eine einzige additiv herzustellende Schicht des Bauteils 10, um schichtweise die in den Figuren 2 und 3 angedeutete poröse Struktur der Komponente bzw. des Bauteils 10 zu erhalten.

Es sind anhand der gezeigten Linienverläufe des Bestrahlungsmusters, erste Bestrahlungsvektoren V1 einer ersten Schraffurbestrahlung und zweite Schraffurvektoren V2 einer zweiten Schraffurbestrahlung gekennzeichnet. Insbesondere sind nebeneinander angeordnete Bestrahlungsvektoren der zweiten Schraffurbestrahlung (zweite Bestrahlungsvektoren V2) zwischen Bestrahlungsvektoren der ersten Schraffurbestrahlung (ersten Bestrahlungsvektoren V1) angeordnet.

Weiterhin ist angedeutet, dass dementsprechend ein Schraffurabstand a1 der ersten Schraffurbestrahlung größer gewählt ist, als ein Schraffurabstand a2 der zweiten Schraffurbestrahlung.

Der Schraffurabstand a1 kann beispielsweise zwischen 2 und 3 mm betragen.

Der Schraffurabstand a2 kann demgegenüber beispielsweise zwischen 0,5 mm und 1 mm betragen.

In Figur 7 ist eine Querschnittsansicht entlang des Schnittes XII in Figur 6 und entlang der Aufbaurichtung z angedeutet, welche eine Schichtfolge von drei übereinander aufgebauten Schichten L zeigt.

Es ist insbesondere erkennbar, dass pro zu bestrahlender oder verfestigter Schicht L verschiedene Schraffur-Bestrahlungsstrategien V1, V2 angewendet werden.

Vorzugsweise wird die erste Schraffurbestrahlung V1 mit einer Bestrahlungsleistung P1 und einer Scan- oder Bestrahlungsgeschwindigkeit v1 durchgeführt. Die Bestrahlungsstrategie der Schraffurbestrahlung wird dagegen dabei vorzugsweise so gewählt, dass die Bestrahlungsleistung P2 geringer ist als P1 und eine Bestrahlungsgeschwindigkeit v2 größer als v1. Dadurch entsteht mit Vorteil und in kontrollierter Weise eine Schichtstruktur, wie im rechten Teil der Figur 6 dargestellt; mithin Poren 12, welche im Betrieb des Bauteils zugänglich für die Durchströmung mit einem Kühlfluid F sind (siehe oben).

Mit anderen Worten wird eine jede Schicht L zwar doppelt belichtet, wohlgemerkt aber so, dass keine vollständig dicht gepackte Materialstruktur entsteht. Die erste Belichtung oder Schraffurbestrahlung erfolgt also mit unterbrochenen Schmelzbädern mit relativ hoher Laserleistung und mittlerer Scangeschwindigkeit. Der Schraffurabstand a1 ist mit den beschriebenen 2 mm bis 3 mm sehr hoch gewählt. Bei der folgenden, zweite Schraffurbestrahlung wird der Schraffurabstand verringert und gleichzeitig werden die Laserleistung P2 abgesenkt und die Scangeschwindigkeit v2 erhöht, was zu weniger großen Schmelzbädern führt. Abgesehen von den zwei verschiedenen Schraffuransätzen, können weitere Belichtungen oder Bestrahlungen durchgeführt, insbesondere auch die Maßnahmen der im folgenden beschriebenen Ausführungsformen zusätzlich angewendet, werden.

Es in der Figur 7 zu erkennen, dass die so erzielte Struktur insbesondere eine gute Durchlässigkeit entlang der Aufbaurichtung z, sowie auch noch passabel in lateraler Richtung innerhalb der x,y- oder Schichtebene gewährleistet.

Die Figur 8 deutet anhand des Bestrahlungsmusters auf der linken Seite einen etwas anderen Ansatz an, nämlich einen, gemäß dem die Bestrahlungsvektoren V2 der zweiten Schraffurbestrahlung relativ zu denjenigen der ersten Schraffurbestrahlung verdreht sind. Ein Drehwinkel α kann beispielweise 90° betragen; er kann aber auch genauso gut beliebige andere Werte annehmen. Es ist beispielhaft in Figur 8 illustriert, dass die Bestrahlungsvektoren V1 vertikal verlaufen, und im rechten Winkel dazu die Bestrahlungsvektoren V2 horizontal.

Wie anhand des Schichtquerschnitts (vergleiche Schnitt entlang IX in Figur 8) in Figur 9 zu erkennen ist, erlaubt dieser Ansatz eine ähnliche Funktionalität, wie oben beschrieben, nämlich eine Ausbildung von regelmäßig angeordneten Poren 12 zur Erzielung einer gerichteten Permeabilität für ein Kühlfluid F.

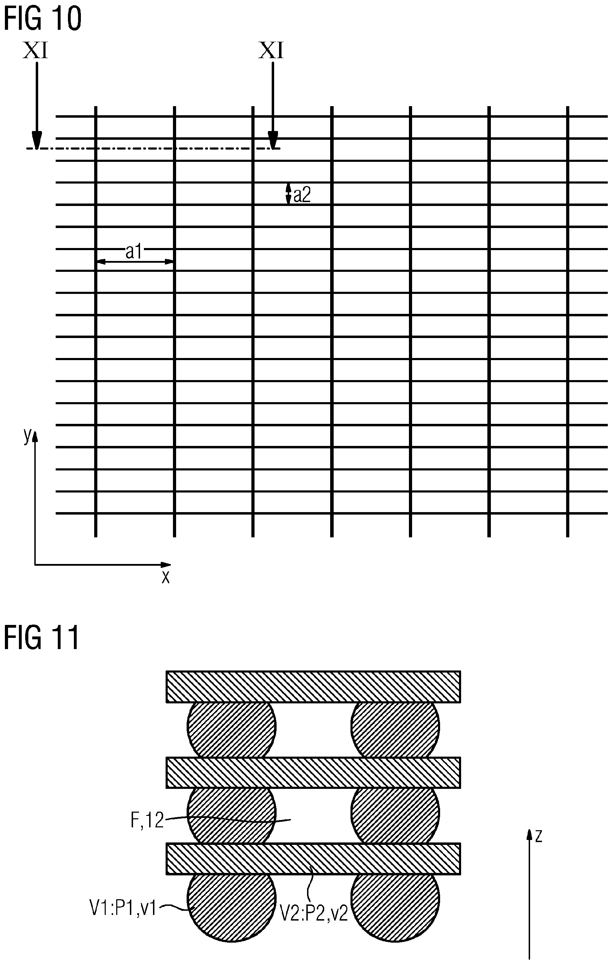

Die in Figur 10 gezeigte Bestrahlungsstrategie ist vergleichbar, d.h. in ähnlicher Weise um einen Winkel verdreht, mit derjenigen aus Figur 8, zeigt im Gegensatz dazu jedoch eine etwas geänderte Schichtanordnung bzw. geänderte Wahl von Bestrahlungsparametern. Demgemäß werden Vollmaterial-Parameter, d.h. Parameter, welche eine weitgehend dichte Materialstruktur erzielen, und Parameter, welche eine poröse Struktur erzeugen können (siehe oben) gewählt. Die Leistung P2 und Scangeschwindigkeit v2 beziehen sich hier auf die Erzielung einer dichten Materialstruktur. Demgegenüber sind die Parameter P1 und v1 der Schraffurvektoren V1 gewählt, um - wie im oben beschriebenen Beispiel - große und teilweise unterbrochene Schmelzbäder auszubilden.

Analog zur Darstellung der Figuren 7 und, zeigt Figur 11 wieder eine Querschnittsansicht der Schichtenfolge (vgl. Schnitt XI), welche in Aufsicht in der Figur 10 dargestellt ist.

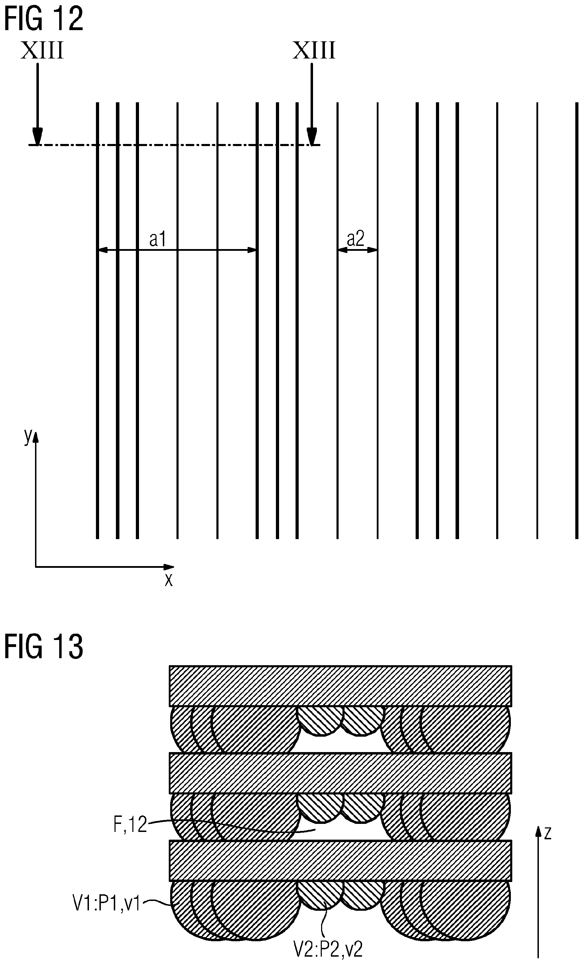

Weiterhin kann eine Bestrahlungsstrategie, wie anhand von Figur 12 dargestellt, angewendet werden, um insbesondere eine vorteilhaft durchlässige oder zweckmäßig für eine Effusionskühlung konfektionierte Poren in xy-Ebene (Darstellungsebene) zu erzielen. Diese Ausgestaltung ähnelt entfernt der Ausführungsform gemäß Figur 8, welche im Unterschied dazu jedoch keine Herstellung von Vollmaterialschichten erlaubt.

Es ist in Figur 12 weiterhin zu erkennen, dass in regelmäßigen Abständen (vergleiche a1) "Freiräume" oder Unterbrechungen im Bestrahlungsmuster belassen werden, um eine Durchlässigkeit in Aufbaurichtung Z zu gewährleisten, welche ohne diese Freiräume durch das Vollmaterial unterbunden würden.

In Figur 13 ist wieder eine Querschnittsansicht der Schichtenfolge, welche in Aufsicht in der Figur 12 dargestellt ist, gezeigt (vgl. Schnitt XIII). Hier ist ebenfalls zu erkennen, dass entsprechende Poren 12 ausgebildet werden, welche die zielgerichtete Permeabilität für das Fluid F bereitstellen.

Sämtliche der in den Figuren 7, 9, 11 und 13 gezeigten Schichtstrukturen können, wie oben angedeutet, für die Wandung wie der entsprechend beschriebenen Bauteilkomponenten 10 verwendet werden, um insbesondere deren Kühlung im Betrieb des Bauteils zu verbessern oder effizienter zu gestalten.

## Patentansprüche

1. Verfahren zum Bereitstellen von Herstellungsanweisungen für die additive Herstellung eines Bauteils (10), umfassend:
- Bereitstellen einer ersten Schraffurbestrahlung (a1, P1, v1) für eine additiv herzustellende Schicht (L), und
- Bereitstellen einer zweiten Schraffurbestrahlung (a2) für die Schicht (L), wobei nebeneinander angeordnete Bestrahlungsvektoren (V) mit einer gegenüber der ersten Schraffurbestrahlung (P1, v1) verringerten Bestrahlungsleistung (P2) und/oder einer erhöhten Bestrahlungsgeschwindigkeit (v2) gewählt werden.

2. Verfahren gemäß Anspruch 1, wobei nebeneinander angeordnete Bestrahlungsvektoren (V2) der zweiten Schraffurbestrahlung zwischen Bestrahlungsvektoren (V1) der ersten Schraffurbestrahlung angeordnet werden.

3. Verfahren gemäß Anspruch 1 oder 2 wobei nebeneinander angeordnete Bestrahlungsvektoren (V2) der zweiten Schraffurbestrahlung relativ zu Bestrahlungsvektoren (V1) der ersten Schraffurbestrahlung, um insbesondere 90°, verdreht werden.

4. Verfahren gemäß einem der vorhergehenden Ansprüche, wobei ein Schraffurabstand (a1) der Bestrahlungsvektoren der ersten Schraffurbestrahlung zwischen 2 mm und 3 mm beträgt.

5. Verfahren gemäß einem der vorhergehenden Ansprüche, wobei ein Schraffurabstand (a2) der Bestrahlungsvektoren der zweiten Schraffurbestrahlung zwischen 0,5 mm und 1 mm beträgt.

6. Verfahren gemäß einem der vorhergehenden Ansprüche, wobei nebeneinander angeordnete Bestrahlungsvektoren (V) derart gewählt werden, dass daraus im Wege einer Bestrahlung mit einem Energiestrahl (5), insbesondere einem Laser oder Elektronenstrahl, eine poröse Struktur der Schicht (L) entsteht.

7. Verfahren gemäß einem der vorhergehenden Ansprüche, welches ein CAM-Verfahren ist.

8. Verfahren zur Herstellung des Bauteils (10) durch ein pulverbett-basiertes additives Herstellungsverfahren, insbesondere selektives Laserschmelzen oder Elektronenstrahlschmelzen, mit den gemäß einem der vorhergehenden Ansprüche bereitgestellten Herstellungsanweisungen.

9. Verfahren gemäß Anspruch 8, wobei die Herstellungsanweisungen für die additiv herzustellende Schicht in einem ersten (B1) Bauteilbereich des Bauteils (10) festgelegt werden, und wobei in einem zweiten, von dem ersten Bauteilbereich verschiedenen, Bauteilbereich (B2), weitere Herstellungsanweisungen definiert werden, welche von den Herstellungsanweisungen verschieden sind.

10. Bauteil (10), welches gemäß dem Verfahren nach Anspruch 8 oder 9 herstellbar oder hergestellt ist, wobei das Bauteil (10) eine zu kühlende Komponente des Heißgaspfades einer Strömungsmaschine, wie einer stationären Gasturbine ist, und wobei das Bauteil (10) eine Wandung (W) aufweist, welche eingerichtet ist, im Betrieb des Bauteils zur Ausbildung einer Effusionskühlung von einem Kühlfluid (F) durchströmt zu werden.

11. Bauteil (10) gemäß Anspruch 10, welches als Turbinenleitschaufel, als Turbinenlaufschaufel, als Hitzeschildkomponente einer Brennkammer einer Strömungsmaschine und/oder als Resonator bzw. Dämpfer ausgestaltet ist.

12. Bauteil (10) gemäß Anspruch 10 oder 11, welches ein Resonatorbauteil für den Einsatz in bzw. an einer Brennkammer einer Strömungsmaschine, wie einer stationären Gasturbine ist, insbesondere ein Helmholtz-Resonator, dessen Material eine Porosität aufweist.

13. Bauteil (10) gemäß einem der Ansprüche 10 bis 12, welches mit isotropen Permeabilitätseigenschaften für ein Kühlfluid (F) ausgebildet ist.

14. Computerprogrammprodukt (CPP), umfassend die Herstellungsanweisungen gemäß dem Verfahren nach einem der Ansprüche 1 bis 7, das bei der Ausführung eines entsprechenden Programms durch einen Computer, beispielsweise zur Ansteuerung und/oder Programmierung eines Build-Prozessors (4) und/oder einer Bestrahlungsvorrichtung (2) einer additiven Herstellungsanlage (100), diesen veranlassen, das Herstellen des Bauteils (10) gemäß einem der Ansprüche 8 oder 9 durchzuführen.

15. Build-Prozessor-Rechenwerk (4) für die additive Herstellung, welches mit Herstellungsanweisungen gemäß dem Verfahren nach einem der Ansprüche 1 bis 7 programmierbar auf und weiterhin eingerichtet ist, eine Bestrahlungsvorrichtung (2) einer additiven Herstellungsanlage (100) zu veranlassen, das Herstellen des Bauteils (10) gemäß einem der Ansprüche 8 oder 9 durchzuführen.
